# EUROPEAN PATENT SPECIFICATION

(11) **EP 4 063 150 B1**
(45) Date of publication and mention of the grant of the patent: **05.07.2023**
(21) Application number: 22156560.9
(22) Date of filing: 14.02.2022
(51) Int. Cl.: B60H 1/00, B60H 1/24, B60K 35/00, G06V 20/59

(54) **VEHICLE COMPRISING A VEHICLE INTERIOR MONITORING DEVICE**
FAHRZEUG MIT EINER FAHRZEUGINNENRAUMÜBERWACHUNGSVORRICHTUNG
VÉHICULE AVEC UN DISPOSITIF DE SURVEILLANCE D'INTÉRIEUR DE VÉHICULE

(30) Priority: 22.03.2021 JP 2021047020
(43) Date of publication of application: 28.09.2022
(73) Proprietor: Suzuki Motor Corporation, Hamamatsu-shi, Shizuoka 432-8611 (JP)
(72) Inventor: MIYAMOTO, Hideto, Hamamatsu-shi, 432-8611 (JP)
(74) Representative: Haseltine Lake Kempner LLP

(56) References cited:
- EP-A1- 3 650 276
- WO-A1-2019/119025
- JP-A- S60 174 314
- JP-A- 2006 200 936

## Description

### Technical Field

The present invention relates to a vehicle comprising a vehicle interior monitoring device configured to monitor the state of a vehicle interior.

### Background Art

A vehicle such as an automobile may be equipped with a vehicle interior monitoring device that is configured to be capable of monitoring the state of a vehicle interior such as whether or not an occupant, in particular, the driver in the vehicle interior is dozing or is drowsy, whether or not the driver is looking aside, and whether or not there is an intruder in the vehicle interior. Typically, the vehicle interior monitoring device includes an imaging unit such as a camera capable of imaging a target area in the vehicle interior, and an illumination unit capable of illuminating the target area. Furthermore, the vehicle interior monitoring device monitors the state of the vehicle interior from an image obtained by imaging the target area using the imaging unit while illuminating the target area using the illumination unit.

An example of such a vehicle interior monitoring device is a navigation system with a camera function in which an imaging means (imaging unit) such as a camera and a light emitting means (illumination unit) arranged on an image display means are provided, and when a suspicious person breaks into the vehicle interior and the illumination in the vehicle interior is insufficient, the light emitting means emits light and the imaging means images the suspicious person (for example, see Patent Literature 1.)

### Citation List

### Patent Literature

Patent Literature 1 JP 2006-200936 A, WO 2019/119025 A1 relates to an imaging system for a drive monitoring system, JPS60174314A relates to a wind direction automatic adjustment apparatus for adjusting the air blowing direction of a vehicle air conditioner according to the occupant's riding position, EP3650276A1 relates to a passenger imaging device, and more particularly to a passenger imaging device for imaging a passenger in a vehicle in which a display device is provided on an instrument panel.

### Problems to be Solved by the Invention

However, in the example of the vehicle interior monitoring device, the imaging unit and the illumination unit are only used to determine the presence or absence of a suspicious person. By using the images obtained by such a vehicle interior monitoring device, it is not possible to clearly monitor a state such as whether or not an occupant, in particular, the driver, in the vehicle interior is dozing or whether or not the driver is looking aside.

Furthermore, in the example of the vehicle interior monitoring device, the illumination unit is arranged on the image display means such as a display that easily generates heat. Therefore, there is a risk that heat is not sufficiently dissipated from the illumination unit, which may cause a heat load (heat deterioration) in the illumination unit and shorten the life of the illumination unit.

In view of such circumstances, it is desired to provide a vehicle comprising a vehicle interior monitoring device which clearly monitors the driver's condition and efficiently dissipates heat from an illumination unit of the vehicle interior monitoring device.

### Means for Solving the Problems

In order to solve the above problems, there is provided a vehicle as set out in independent claim 1. Preferred embodiments of the present invention are laid down in the appended dependent claims.

### Advantageous Effects of Invention

In the vehicle according to the present invention, the driver's condition can be clearly monitored, and heat can be efficiently dissipated from the illumination unit.

### Brief Description of Drawings

Figure 1 is a front view schematically showing an instrument panel for a vehicle having a vehicle interior monitoring device according to an embodiment and peripheral parts thereof.
Figure 2 is a front view schematically showing a central region in a vehicle width direction of the instrument panel for the vehicle having the vehicle interior monitoring device according to the embodiment, and a peripheral region thereof.
Figure 3 is a cross-sectional view taken along a line X-X of Figure 2.
Figure 4 is a cross-sectional view taken along a line Y-Y of Figure 2.

### Mode for Carrying Out the Invention

A vehicle interior monitoring device according to an embodiment will be described. Note that the vehicle interior monitoring device according to the present embodiment is installed in a vehicle interior, and a vehicle provided with such a vehicle interior is an automobile. However, the vehicle may be a vehicle other than an automobile, which is provided with a vehicle interior which an occupant such as a driver can get into.

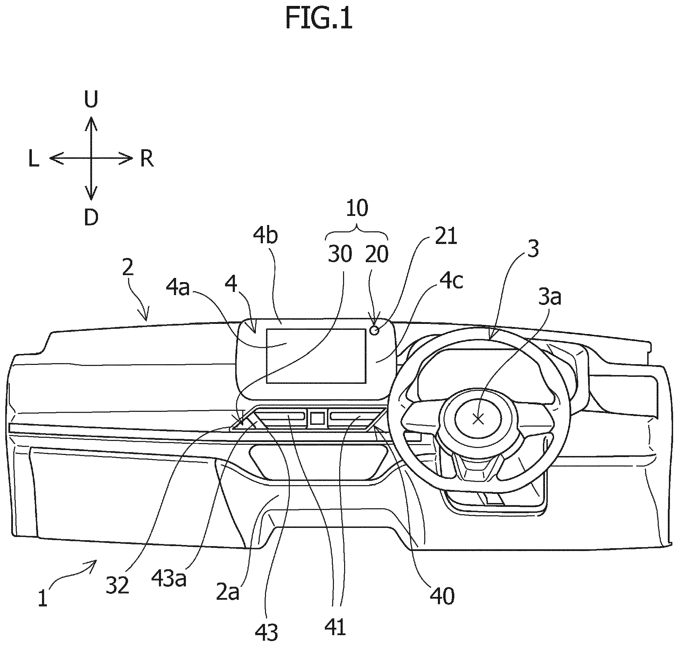

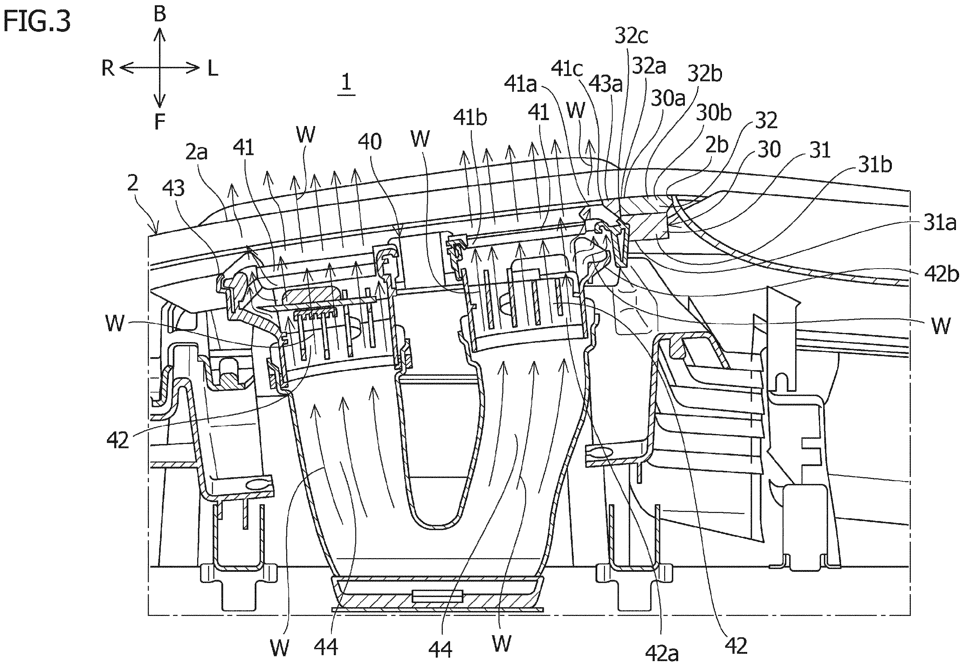

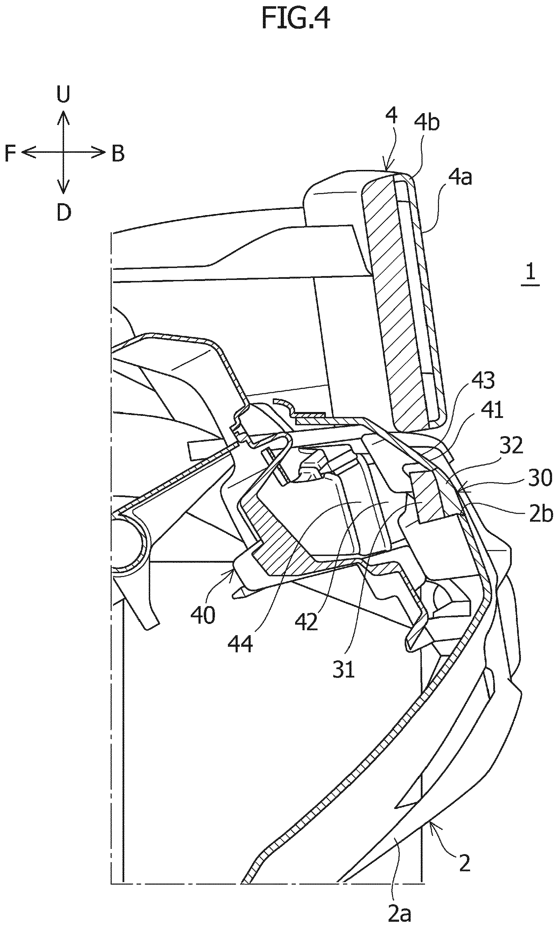

In Figures 1 to 4 used for the description in the present specification, directions with respect to the vehicle are shown as follows. In Figures 3 and 4, a front side of the vehicle and a back side of the vehicle are designated by a one-headed arrow F and a one-headed arrow B, respectively. In Figures 1 to 3, a leftward direction and a rightward direction when facing the front side of the vehicle are designated by a one-headed arrow L and a one-headed arrow R, respectively. A vehicle width direction is designated by the one-headed arrow L and the one-headed arrow R. Furthermore, in Figures 1, 2, and 4, an upward direction and a downward direction of the vehicle are designated by a one-headed arrow U and a one-headed arrow D, respectively.

### Outline of Vehicle Interior Monitoring Device

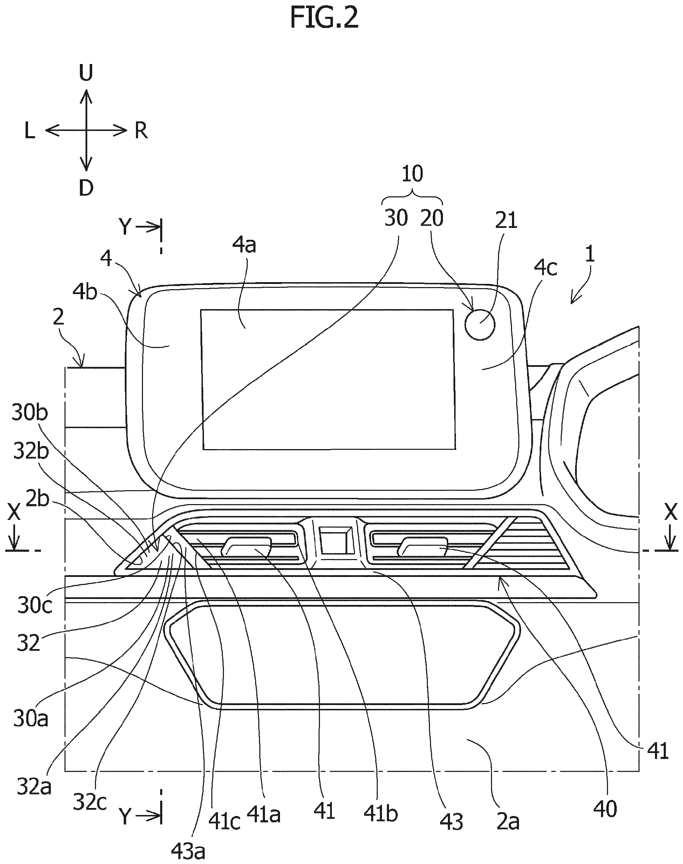

The outline of a vehicle interior monitoring device 10 according to the present embodiment will be described with reference to Figures 1 to 4. That is, the vehicle interior monitoring device 10 is generally configured as follows. As shown in Figures 1 and 2, the vehicle interior monitoring device 10 includes an imaging unit 20 which is configured to be capable of imaging a target area in the vehicle interior 1. The target area is set to an area including a face of a driver (not shown) sitting on a driver's seat (not shown) in the vehicle interior 1.

As shown in Figures 1 to 4, the vehicle interior monitoring device 10 includes an illumination unit 30 which is configured to be capable of illuminating the target area. The vehicle interior monitoring device 10 is configured to monitor the state of the vehicle interior 1 based on an image obtained by imaging the target area by using the imaging unit 20 while illuminating the target area by using the illumination unit 30.

An instrument panel 2 is provided on the front side of the vehicle in the vehicle interior 1. A blow-out port 41 configured to blow air for air-conditioning so as to be capable of adjusting the temperature and humidity in the vehicle interior 1 is provided in a central region 2a in the vehicle width direction of the instrument panel 2. In Figures 2 to 4, the flow of the air for air-conditioning is indicated by one-headed arrows W.

Furthermore, as shown in Figures 3 and 4, an air flow duct 42 configured to guide the air for air-conditioning to the blow-out port 41 is provided in the central region 2a of the instrument panel 2. As shown in Figures 1 and 2, the illumination unit 30 is arranged in the central region 2a of the instrument panel 2 on the side of a passenger seat (not shown) in the vehicle width direction with respect to the blow-out port 41.

Furthermore, the vehicle interior monitoring device 10 can be generally configured as follows. As shown in Figure 2, a part or the whole of the illumination unit 30 is located below a part of the blow-out port 41, and arranged so as to be aligned with this part of the blow-out port 41 in an up-down direction.

A partition portion 43a through which the part or the whole of the illumination unit 30 and the part of the blow-out port 41 which are aligned with each other in the up-down direction are separated from each other is provided in the central region 2a of the instrument panel 2. The partition portion 43a is inclined so as to approach the driver's seat in the vehicle width direction as extending from the upper side to the lower side.

As shown in Figure 3, the air flow duct 42 includes a main body portion 42a which is located on the front side of the vehicle with respect to the blow-out port 41 and is adjacent to the blow-out port 41. As shown in Figures 3 and 4, the air flow duct 42 includes a protruding portion 42b which is configured to protrude to the passenger seat side in the vehicle width direction of the main body portion 42a. A part or the entirety of the illumination unit 30 is located below the protruding portion 42b, and arranged so as to be aligned with the protruding portion 42b in the up-down direction.

The illumination unit 30 includes a light emitter 31 which is configured to be capable of emitting light. The illumination unit 30 includes an illumination lens 32 which is configured so as to allow light emitted from the light emitter 31 to pass therethrough toward the vehicle interior 1. An air guide duct 44 which is located on the front side of the vehicle with respect to the air flow duct 42 and is adjacent to the air flow duct 42 is provided in the central region 2a of the instrument panel 2.

The air guide duct 44 extends so as to guide air for air-conditioning from the air guide duct 44 through the air flow duct 42 to the blow-out port 41. The light emitter 31 is arranged so as to extend from the illumination lens 32 along the extending direction of the air guide duct 44.

### Details of Vehicle Interior

Referring to Figures 1 and 2, the vehicle interior 1 can be configured in detail as follows. The instrument panel 2 in the vehicle interior 1 is provided with a steering wheel 3 which is attached on one side in the vehicle width direction with respect to the central region 2a of the instrument panel 2. The driver's seat (not shown) in the vehicle interior 1 is located on the rear side of the vehicle with respect to the steering wheel 3 and arranged so as to face the steering wheel 3. The passenger seat (not shown) in the vehicle interior 1 is located on the opposite side to the driver's seat with respect to the central region 2a of the instrument panel 2 in the vehicle width direction.

In Figure 1, the steering wheel 3 is located on the right side with respect to the central region 2a of the instrument panel 2. Therefore, the driver's seat is located on the right side with respect to the central region 2a of the instrument panel 2, and the passenger seat is located on the left side with respect to the central region 2a of the instrument panel 2. Such a vehicle is a so-called right-hand drive vehicle. However, the vehicle may also be a left-hand drive vehicle.

As shown in Figures 1 and 2, the central region 2a of the instrument panel 2 in the vehicle interior 1 is provided with a display unit 4 having a display panel 4a which is configured to be capable of displaying information for occupants such as a driver. The display unit 4 is located above the blow-out port 41. Furthermore, the display unit 4 has a frame 4b arranged so as to surround the outer periphery of the display panel 4a.

The display unit 4 is a component of a car navigation system. However, the display unit may also be a component having a display surface configured to be capable of displaying information for occupants, in particular, the driver in a system other than a car navigation system. For example, the display unit may also be a component of a meter panel having a speedometer, a tachometer, etc., an audio unit, an air-conditioning unit, or the like.

The vehicle interior 1 is provided with an air conditioner 40 including the blow-out port 41, the air flow duct 42, and the air guide duct 44. The air conditioner 40 has a surface member 43 that faces the inside of the vehicle interior 1 and is arranged along the surface of the central region 2a of the instrument panel 2. This surface member 43 includes the partition portion 43a described above. The surface member 43 is formed so as to surround each blow-out port 41 and the illumination lens 32 of the illumination unit 30.

### Details of Vehicle Interior Monitoring Device and Air Conditioner

Referring to Figures 1 to 4, the vehicle interior monitoring device 10 and the air conditioner 40 according to the present embodiment can be configured in detail as follows. The imaging unit 20 is configured to be capable of acquiring still images and video images. The imaging unit 20 is a camera. However, the imaging unit may also be a device other than a camera.

As shown in Figures 1 and 2, the imaging unit 20 has an imaging lens 21 used for imaging the target area. The imaging lens 21 is arranged on the frame 4b of the display unit 4. More specifically, the imaging lens 21 is arranged on a side edge portion 4c of the frame 4b of the display unit 4, which is located on the driver's seat side in the vehicle width direction with respect to the display panel 4a of the display unit 4.

As shown in Figure 1, the imaging lens 21 is located above a rotation axis 3a of the steering wheel 3. The imaging lens 21 may also be located above the steering wheel 3.

Referring to Figures 3 and 4, the light emitter 31 of the illumination unit 30 is configured by using an LED (light emitting diode). However, the light emitter may be configured by using a light emitting means other than an LED. For example, the light emitting means may also be an organic EL (organic electroluminescence), an incandescent lamp or the like.

As shown in Figures 1 and 2, the illumination unit 30, in particular, the illumination lens 32 thereof is located on the passenger seat side in the vehicle width direction with respect to the display panel 4a of the display unit 4. The illumination lens 32 is inserted in a lens insertion hole 2b which is formed so as to penetrate the central region 2a of the instrument panel 2. The surface of the illumination lens 32 is arranged along the surface of the central region 2a of the instrument panel 2.

As shown in Figure 2, the illumination lens 32 has a first side portion 32a located on the driver's seat side in the vehicle width direction, and a second side portion 32b located on the passenger seat side in the vehicle width direction. The first and second side portions 32a and 32b of the illumination lens 32 are adjacent to each other in the vehicle width direction. The first side portion 32a has a side edge 32c located on the driver's seat side in the vehicle width direction. The side edge 32c of the first side portion 32a of the illumination lens 32 is inclined so as to approach the driver's seat in the vehicle width direction as extending from the upper side to the lower side.

As shown in Figure 3, the light emitter 31 of the illumination unit 30 has a first side portion 31a which is located on the front side of the vehicle with respect to the first side portion 32a of the illumination lens 32, and is adjacent to the first side portion 32a. The light emitter 31 also has a second side portion 3 1b which is located on the front side of the vehicle with respect to the second side portion 32b of the illumination lens 32 and is adjacent to the second side portion 32b. The first and second side portions 31a and 31b of the light emitter 31 are adjacent to each other in the vehicle width direction.

Referring to Figures 2 and 3, the illumination unit 30 also has a first side portion 30a located on the driver's seat side in the vehicle width direction, and a second side portion 30b located on the passenger seat side in the vehicle width direction. The first side portion 30a of the illumination unit 30 includes the first side portion 31a of the light emitter 31 and the first side portion 32a of the illumination lens 32. The first side portion 30a of the illumination unit 30 has a side edge 30c corresponding to the side edge 32c of the first side portion 32a of the illumination lens 32. The second side portion 30b of the illumination unit 30 includes the second side portion 31b of the light emitter 31 and the second side portion 32b of the illumination lens 32.

As shown in Figures 1 and 2, the air conditioner 40 has two blow-out ports 41 located in the central region 2a of the instrument panel 2. The air conditioner 40 has two air flow ducts 42 corresponding to the two blow-out ports 41, respectively. The air conditioner 40 has two air guide ducts 44 corresponding to the two air flow ducts 42, respectively.

However, the air conditioner may also have one blow-out port or three or more blow-out ports. The air conditioner may also have one air flow duct or three or more air flow ducts corresponding to the one blow-out port or three or more blow-out ports, respectively. The air conditioner may also have one air guide duct or three or more air guide ducts corresponding to the one air guide duct or three or more air flow ducts, respectively.

Referring to Figures 1 to 3, these two blow-out ports 41 are arranged side by side in the vehicle width direction. The two blow-out ports 41 are configured substantially symmetrically in the vehicle width direction. As shown in Figures 1 and 2, the partition portion 43a of the surface member 43 is arranged between one blow-out port of the two blow-out ports 41 located on the passenger seat side in the vehicle width direction and the illumination unit 30. Therefore, the one blow-out port 41 is adjacent to the partition portion 43a.

In the following description, only the one blow-out port 41 adjacent to the partition portion 43a, one air flow duct 42 corresponding to the one air blow-out port 41 out of the two air flow ducts 42, one air guide duct 44 corresponding to the one air flow duct 42 out of the two air guide ducts 44 will be described. Therefore, in the following description, the components which are simply referred to as "blow-out port", "air flow duct", and "air guide duct" are assumed to indicate these "one blow-out port", "one air flow duct", and "one air guide duct", respectively.

As shown in Figure 2, the blow-out port 41 has a first side portion 41a located on the passenger seat side in the vehicle width direction, and a second side portion 41b located on the driver's seat side in the vehicle width direction. The first and second side portions 41a and 41b of the blow-out port 41 are adjacent to each other in the vehicle width direction. The first side portion 41a has a side edge 41c located on the passenger seat side in the vehicle width direction. The side edge 41c of the first side portion 41a of the blow-out port 41 is inclined so as to approach the driver's seat in the vehicle width direction as it extends from the upper side to the lower side.

As shown in Figure 3, the first side portion 41a of the blow-out port 41 is located on the rear side of the vehicle with respect to the protruding portion 42b of the air flow duct 42, and is adjacent to the protruding portion 42b. The first side portion 41a of the blow-out port 41 and the protruding portion 42b of the air flow duct 42 communicate with each other.

The second side portion 41b of the blow-out port 41 is located on the rear side of the vehicle with respect to the main body portion 42a of the air flow duct 42 and is adjacent to the main body portion 42a. The second side portion 41b of the blow-out port 41 and the main body portion 42a of the air flow duct 42 communicate with each other.

As shown in Figures 3 and 4, the main body portion 42a of the air flow duct 42 is located on the rear side of the vehicle with respect to the air guide duct 44 and is adjacent to the air guide duct 44. The main body portion 42a of the air flow duct 42 and the air guide duct 44 communicate with each other.

The relationship between the illumination unit 30 and the air conditioner 40 as described above is as follows. As shown in Figure 2, the first side portion 30a of the illumination unit 30, in particular, the first side portion 32a of the illumination lens 32 is located below the first side portion 41a of the blow-out port 41 and is arranged to be aligned with the first side portion 41a in the up-down direction.

The partition portion 43a is sandwiched by the side edge 30c of the first side portion 30a of the illumination unit 30, in particular, the side edge 32c of the first side portion 32a of the illumination lens 32 and the side edge 41c of the first side portion 41a of the blow-out port 41. Referring to Figures 3 and 4, the first side portion 30a of the illumination unit 30, in particular, the first side portion 31a of the light emitter 31 is located below the protruding portion 42b of the air flow duct 42, and arranged to be aligned with the protruding portion 42b in the up-down direction.

Referring to Figure 3, in the air conditioner 40, as indicated by the arrows W, the air for air-conditioning is sent from the air guide duct 44 through the air flow duct 42 to the blow-out port 41, and then the air for air-conditioning is blown out from the blow-out port 41 into the vehicle interior 1. When such air for air-conditioning passes through the air flow duct 42, it stagnates at the protruding portion 42b of the air flow duct 42. The air for air-conditioning stagnating as described above can cool the protruding portion 42b of the air flow duct 42, and the cooled protruding portion 42b can then cool the first side portion 31a of the light emitter 31 of the illumination unit 30, which can cool the entirety of the light emitter 31.

As described above, the vehicle interior monitoring device 10 according to the present embodiment is a vehicle interior monitoring device 10 that includes the imaging unit 20 configured to be capable of imaging a target area in the vehicle interior 1, the target area containing the face of the driver sitting in the driver's seat in the vehicle interior 1, and the illumination unit 30 configured to be capable of illuminating the target area, and it is configured to monitor the state of the vehicle interior 1 based on an image obtained by imaging the target area using the imaging unit 20 while illuminating the target area using the illumination unit 30. The blow-out port 41 configured to send air for air-conditioning so as to be capable of adjusting the temperature and humidity in the vehicle interior 1 and the air flow duct 42 configured to guide the air for air-conditioning to the blow-out port 41 are provided in the central region 2a in the vehicle width direction of the instrument panel 2 located in the vehicle interior 1 on the front side of the vehicle. The illumination unit 30 is arranged in the central region 2a of the instrument panel 2 on the passenger seat side in the vehicle width direction with respect to the blow-out port 41.

Generally, air which has been cooled by a heat-exchanger is sent to an air flow duct through an air guide duct provided in an air-conditioning duct or the like, and then the air for air-conditioning is sent from the air flow duct to a blow-out port of a center louver or the like into a vehicle interior. In view of such configuration, in the vehicle interior monitoring device 10 according to the present embodiment, the illumination unit 30 is arranged so as to be adjacent to the blow-out port 41 in the vehicle width direction in the central region 2a of the instrument panel 2. Therefore, the heat of the illumination unit 30 can be efficiently released to the air flow duct 42 at the front side of the blow-out port 41 to be cooled by the air for air-conditioning. In other words, the heat can be efficiently dissipated from the illumination unit 30. As a result, the heat load (heat deterioration) on the illumination unit 30 can be reduced, and the shortening of the life of the illumination unit 30 can be avoided.

Furthermore, in the vehicle interior monitoring device 10 according to the present embodiment, the illumination unit 30 is arranged in the central region 2a of the instrument panel 2 on the passenger seat side opposite to the driver's seat in the vehicle width direction. Therefore, even when the driver operates a device on the instrument panel 2 by hand, light emitted from the illumination unit 30 can illuminate the driver's face without being disturbed by the driver's hand. The imaging unit 20 can image the target area in a state in which the driver's face is illuminated by the light of the illumination unit 30, and the driver's condition can be clearly monitored from the image obtained by this imaging.

In the vehicle interior monitoring device 10 according to the present embodiment, a part or the whole of the illumination unit 30 is located below a part of the blow-out port 41, and is arranged to be aligned with the part of the blow-out port 41 in the up-down direction. In such a vehicle interior monitoring device 10, the heat of the illumination unit 30 which tends to rise can be efficiently released by a part of the air flow duct 42 at the front side of the blow-out port 41 located above the part or the entirety of the illumination unit 30.

In the vehicle interior monitoring device 10 according to the present embodiment, the partition portion 43a through which the part or the entirety of the illumination unit 30 and the part of the blow-out port 41 which are aligned with each other in the up-down direction are separated from each other is provided in the central region 2a of the instrument panel 2, and the partition portion 43a is inclined so as to approach the driver's seat in the vehicle width direction as extending from the upper side to the lower side.

In such a vehicle interior monitoring device 10, a length of the inclined partition portion 43a can be increased even within a limited space such as the inside of the central region 2a of the instrument panel 2, and as a result, the area of a region where the air flow duct 42 located on the front side of the vehicle with respect to the partition portion 43a faces the illumination unit 30 can be increased. Therefore, the heat of the illumination unit 30 can be efficiently released to the air flow duct 42.

In the vehicle interior monitoring device 10 according to the present embodiment, the air flow duct 42 includes the main body portion 42a which is located on the front side of the vehicle with respect to the blow-out port 41, and is adjacent to the blow-out port 41, and the protruding portion 42b configured to protrude from the main body portion 42a to the passenger seat side in the vehicle width direction, and a part or the entirety of the illumination unit 30 is located below the protruding portion 42b, and is arranged to be aligned with the protruding portion 42b in the up-down direction.

In such a vehicle interior monitoring device 10, a time during which the air for air-conditioning stagnates at the protruding portion 42b of the air flow duct 42 is longer than a time during which the air for air-conditioning stagnates at the main body portion 42a of the air flow duct 42. Therefore, the protruding portion 42b is more likely to be cooled than the main body portion 42a. Therefore, the heat of the illumination unit 30 which tends to rise can be efficiently released by the protruding portion 42b in the front side of the blow-out port 41 located above the part or the entirety of the illumination unit 30.

In the vehicle interior monitoring device 10 according to the present embodiment, the illumination unit 30 includes the light emitter 31 configured to be capable of emitting light, and the illumination lens 32 configured to be capable of passing the light emitted from the light emitter 31 therethrough into the vehicle interior 1, the air guide duct 44 which is located on the front side of the vehicle with respect to the air flow duct 42 and is adjacent to the air flow duct 42 is provided in the central region 2a of the instrument panel 2, the air guide duct 44 extends so as to guide the air for air-conditioning from the air guide duct 44 through the air flow duct 42 to the blow-out port 41, and the light emitter 31 is arranged so as to extend from the illumination lens 32 along the extending direction of the air guide duct 44.

In such a vehicle interior monitoring device 10, the light emitter 31 of the illumination unit 30 extends in the same direction as the air flow duct 42 and the air guide duct 44 that guides the air for air-conditioning to the air flow duct 42, so that it is possible to increase the area of the region where the air flow duct 42 faces the light emitter 31 of the illumination unit 30. Therefore, the heat of the illumination unit 30 can be efficiently released to the air flow duct 42.

Furthermore, cloudiness on the illumination lens 32 of the illumination unit 30 which may occur due to temperature and humidity conditions in the vehicle interior 1 can be suppressed by the air for air-conditioning. As a result, the imaging unit 20 can image the target area clearly with the driver's face, and the driver's condition can be accurately monitored from the image obtained by this imaging.

Although an embodiment of the present invention has been described so far, the present invention is not limited to the above-described embodiment, but it is defined by the appended claims.

### Reference Signs List

- 1: vehicle interior,
- 2: instrument panel,
- 2a: central region
- 10: vehicle interior monitoring device,
- 20: imaging unit,
- 30: illumination unit,
- 31: light emitter,
- 32: illumination lens,
- 41: blow-out port,
- 42: air flow duct,
- 43a: partition portion,
- 44: air guide duct

## Claims

1. A vehicle comprising a vehicle interior monitoring device (10), wherein
the vehicle interior monitoring device (10) comprises:
an imaging unit (20) configured to be capable of imaging a target area in a vehicle interior (1), the target area containing a face of a driver sitting in a driver's seat in the vehicle interior (1); and
an illumination unit (30) configured to be capable of illuminating the target area,
the vehicle interior monitoring device (10) being configured to monitor a state of the vehicle interior (1) based on an image obtained by imaging the target area with the imaging unit (20) while illuminating the target area using the illumination unit (30), wherein:
a blow-out port (41) configured to send air for air-conditioning so as to be capable of adjusting temperature and humidity in the vehicle interior (1), and an air flow duct (42) configured to guide the air for air-conditioning to the blow-out port (41) are provided in a central region (2a) in a vehicle width direction of an instrument panel (2) located in the vehicle interior (1) on a front side of the vehicle,
**characterized in that**:
the illumination unit (30) is arranged in the central region (2a) of the instrument panel (2) on a passenger seat side in the vehicle width direction with respect to the blow-out port (41); and
a part or the entirety of the illumination unit (30) is located below a part of the blow-out port (41), and arranged so as to be aligned with the part of the blow-out port (41) in an up-down direction.

2. The vehicle according to claim 1, wherein:
a partition portion (43a) through which the part or the entirety of the illumination unit (30) and the part of the blow-out port (41) which are aligned with each other in the up-down direction are separated from each other is provided in the central region (2a) of the instrument panel (2); and
the partition portion (43a) is inclined so as to approach the driver's seat in the vehicle width direction as extending from an upper side to a lower side.

3. The vehicle according to claim 1 or 2, wherein:
the air flow duct (42) includes a main body portion (42a) which is located on the front side of the vehicle with respect to the blow-out port (41) and is adjacent to the blow-out port (41), and a protruding portion (42b) configured to protrude from the main body portion (42a) to the passenger seat side in the vehicle width direction; and
a part or the entirety of the illumination unit (30) is located below the protruding portion (42b) and is arranged so as to be aligned with the protruding portion (42b) in the up-down direction.

4. The vehicle according to any one of claims 1 to 3, wherein:
the illumination unit (30) includes a light emitter (31) configured to be capable of emitting light, and an illumination lens (32) configured to be capable of passing the light emitted from the light emitter (31) therethrough into the vehicle interior (1);
an air guide duct (44) which is located on the front side of the vehicle with respect to the air flow duct (42) and is adjacent to the air flow duct (42) is provided in the central region (2a) of the instrument panel (2);
the air guide duct (44) extends so as to guide the air for air-conditioning from the air guide duct (44) through the air flow duct (42) to the blow-out port (41); and
the light emitter (31) is arranged so as to extend from the illumination lens (32) along an extending direction of the air guide duct (44).

## Patentansprüche

1. Fahrzeug, umfassend eine Fahrzeuginnenraumüberwachungsvorrichtung (10), wobei die Fahrzeuginnenraumüberwachungsvorrichtung (10) umfasst:
eine Abbildungseinheit (20), die so ausgelegt ist, dass sie einen Zielbereich in einem Fahrzeuginnenraum (1) abbilden kann, wobei der Zielbereich ein Gesicht eines Fahrers enthält, der auf einem Fahrersitz im Fahrzeuginnenraum (1) sitzt; und
eine Beleuchtungseinheit (30), die so ausgelegt ist, dass sie den Zielbereich beleuchten kann,
wobei die Fahrzeuginnenraumüberwachungsvorrichtung (10) so ausgelegt ist, dass sie einen Zustand des Fahrzeuginnenraums (1) basierend auf einem Bild überwacht, das durch Abbilden des Zielbereichs mit der Abbildungseinheit (20) erhalten wird, während der Zielbereich unter Verwendung der Beleuchtungseinheit (30) beleuchtet wird, wobei:
eine Ausblasöffnung (41), die so ausgelegt ist, dass sie Luft zur Klimatisierung überträgt, um Temperatur und Luftfeuchtigkeit im Fahrzeuginnenraum (1) einstellen zu können, und ein Luftströmungskanal (42), der so ausgelegt ist, dass er die Luft zur Klimatisierung zur Ausblasöffnung (41) leitet, in einem mittleren Bereich (2a) in einer Fahrzeugbreitenrichtung einer Instrumententafel (2) vorgesehen sind, die sich im Fahrzeuginnenraum (1) auf einer Vorderseite des Fahrzeugs befindet,
**dadurch gekennzeichnet, dass**:
die Beleuchtungseinheit (30) im mittleren Bereich (2a) der Instrumententafel (2) auf einer Beifahrersitzseite in Fahrzeugbreitenrichtung bezüglich der Ausblasöffnung (41) angeordnet ist; und
ein Teil oder die Gesamtheit der Beleuchtungseinheit (30) sich unterhalb eines Teils der Ausblasöffnung (41) befindet und so angeordnet ist, dass er/sie mit dem Teil der Ausblasöffnung (41) in der Aufwärts-/Abwärtsrichtung ausgerichtet ist.

2. Fahrzeug nach Anspruch 1, wobei:
ein Trennabschnitt (43a), durch den der Teil oder die Gesamtheit der Beleuchtungseinheit (30) und der Teil der Ausblasöffnung (41), die in der Aufwärts-/Abwärtsrichtung miteinander ausgerichtet sind, voneinander getrennt sind, im mittleren Bereich (2a) der Instrumententafel (2) vorgesehen ist; und
der Trennabschnitt (43a) so geneigt ist, dass er sich in Fahrzeugbreitenrichtung dem Fahrersitz nähert, während er sich von einer oberen Seite zu einer unteren Seite erstreckt.

3. Fahrzeug nach Anspruch 1 oder 2, wobei:
der Luftströmungskanal (42) einen Hauptkörperabschnitt (42a), der sich bezüglich der Ausblasöffnung (41) auf der Vorderseite des Fahrzeugs befindet und benachbart zur Ausblasöffnung (41) ist, und einen vorstehenden Abschnitt (42b) aufweist, der so ausgelegt ist, dass er vom Hauptkörperabschnitt (42a) zur Seite des Beifahrersitzes in Fahrzeugbreitenrichtung vorsteht; und
ein Teil oder die Gesamtheit der Beleuchtungseinheit (30) sich unterhalb des vorstehenden Abschnitts (42b) befindet und so angeordnet ist, dass sie mit dem vorstehenden Abschnitt (42b) in der Aufwärts-/Abwärtsrichtung ausgerichtet ist.

4. Fahrzeug nach einem der Ansprüche 1 bis 3, wobei:
die Beleuchtungseinheit (30) einen Lichtsender (31), der so ausgelegt ist, dass er Licht emittieren kann, und eine Beleuchtungslinse (32) aufweist, die so ausgelegt ist, dass sie das vom Lichtsender (31) emittierte Licht durch sie hindurch in den Fahrzeuginnenraum (1) durchlassen kann;
ein Luftführungskanal (44), der sich bezüglich des Luftströmungskanals (42) auf der Vorderseite des Fahrzeugs befindet und benachbart zum Luftströmungskanal (42) ist, im mittleren Bereich (2a) der Instrumententafel (2) vorgesehen ist;
der Luftführungskanal (44) sich so erstreckt, dass die Luft zur Klimatisierung vom Luftführungskanal (44) durch den Luftströmungskanal (42) zur Ausblasöffnung (41) geleitet wird; und
der Lichtsender (31) so angeordnet ist, dass er sich von der Beleuchtungslinse (32) entlang einer Erstreckungsrichtung des Luftführungskanals (44) erstreckt.

## Revendications

1. Véhicule comprenant un dispositif de surveillance d'habitacle de véhicule (10), dans lequel
le dispositif de surveillance d'habitacle de véhicule (10) comprend :
une unité d'imagerie (20) configurée pour être capable d'imager une zone cible dans un habitacle de véhicule (1), la zone cible contenant un visage d'un conducteur assis sur un siège de conducteur dans l'habitacle de véhicule (1) ; et
une unité d'éclairage (30) configurée pour être capable d'éclairer la zone cible,
le dispositif de surveillance d'habitacle de véhicule (10) étant configuré pour surveiller un état de l'habitacle de véhicule (1) sur la base d'une image obtenue en imageant la zone cible avec l'unité d'imagerie (20) tout en éclairant la zone cible à l'aide de l'unité d'éclairage (30), dans lequel :
un orifice de soufflage (41) configuré pour envoyer de l'air pour la climatisation de manière à être capable d'ajuster la température et l'humidité dans l'habitacle de véhicule (1), et un conduit d'écoulement d'air (42) configuré pour guider l'air pour la climatisation vers l'orifice de soufflage (41) sont prévus dans une région centrale (2a) dans une direction de la largeur du véhicule d'un tableau de bord (2) situé dans l'habitacle de véhicule (1) sur un côté avant du véhicule,
**caractérisé en ce que** :
l'unité d'éclairage (30) est agencée dans la région centrale (2a) du tableau de bord (2) sur un côté siège passager dans la direction de la largeur du véhicule par rapport à l'orifice de soufflage (41) ; et
une partie ou la totalité de l'unité d'éclairage (30) est située au-dessous d'une partie de l'orifice de soufflage (41), et agencée de manière à être alignée avec la partie de l'orifice de soufflage (41) dans une direction de haut en bas.

2. Véhicule selon la revendication 1, dans lequel :
une partie de séparation (43a) à travers laquelle la partie ou la totalité de l'unité d'éclairage (30) et la partie de l'orifice de soufflage (41) qui sont alignées l'une avec l'autre dans la direction de haut en bas sont séparées l'une de l'autre est prévue dans la région centrale (2a) du tableau de bord (2) ; et
la partie de séparation (43a) est inclinée de manière à s'approcher du siège de conducteur dans la direction de la largeur du véhicule en s'étendant d'un côté supérieur à un côté inférieur.

3. Véhicule selon la revendication 1 ou 2, dans lequel :
le conduit d'écoulement d'air (42) comporte une partie de corps principal (42a) qui est située sur le côté avant du véhicule par rapport à l'orifice de soufflage (41) et est adjacente à l'orifice de soufflage (41), et une partie en saillie (42b) configurée pour faire saillie de la partie de corps principal (42a) vers le côté du siège passager dans la direction de la largeur du véhicule ; et
une partie ou la totalité de l'unité d'éclairage (30) est située sous la partie en saillie (42b) et est agencée de manière à être alignée avec la partie en saillie (42b) dans la direction de haut en bas.

4. Véhicule selon l'une quelconque des revendications 1 à 3, dans lequel :
l'unité d'éclairage (30) comporte un émetteur de lumière (31) configuré pour être capable d'émettre de la lumière, et une lentille d'éclairage (32) configurée pour être capable de faire passer la lumière émise par l'émetteur de lumière (31) à travers celle-ci dans l'habitacle de véhicule (1) ;
un conduit de guidage d'air (44) qui est situé sur le côté avant du véhicule par rapport au conduit d'écoulement d'air (42) et est adjacent au conduit d'écoulement d'air (42) est prévu dans la région centrale (2a) du tableau de bord (2) ;
le conduit de guidage d'air (44) s'étend de manière à guider l'air pour la climatisation depuis le conduit de guidage d'air (44) à travers le conduit d'écoulement d'air (42) jusqu'à l'orifice de soufflage (41) ; et
l'émetteur de lumière (31) est agencé de manière à s'étendre depuis la lentille d'éclairage (32) le long d'une direction d'extension du conduit de guidage d'air (44).
